(19) Europäisches Patentamt
European Patent Office
Office européen des brevets

(11) Veröffentlichungsnummer: **0 021 303**
**B1**

(12) # EUROPÄISCHE PATENTSCHRIFT

(45) Veröffentlichungstag der Patentschrift: **08.12.82**

(51) Int. Cl.³: **C 08 L 77/00** // (C08L77/00, 23/30)

(21) Anmeldenummer: **80103345.7**

(22) Anmeldetag: **16.06.80**

(54) **Mit Fasern verstärkte Polyamid-Formmassen.**

(30) Priorität: **03.07.79 DE 2926778**

(43) Veröffentlichungstag der Anmeldung: **07.01.81 Patentblatt 81/1**

(45) Bekanntmachung des Hinweises auf die Patenterteilung: **08.12.82 Patentblatt 82/49**

(84) Benannte Vertragsstaaten: **DE FR GB IT NL**

(56) Entgegenhaltungen:
**DE-A-2 435 266**
**GB-A-1 403 797**

(73) Patentinhaber: **BAYER AG, Zentralbereich Patente, Marken und Lizenzen, D-5090 Leverkusen 1, Bayerwerk (DE)**

(72) Erfinder: **Sanderson, John Ronald, Dr., Jefferson Chemical Co., POB 4128, North Austin Station Austin, Texas 78765 (US)**
Erfinder: **Binsack, Rudolf, Dr., Bethelstrasse 4a, D-4150 Krefelde (DE)**
Erfinder: **Michael, Dietrich, Dr., Deswatinesstrasse 57, D-4150 Krefeld (DE)**
Erfinder: **Bonten, Heinrich, An der Heimstätte 23, D-4150 Krefeld (DE)**

**EP 0 021 303 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Mit Fasern verstärkte Polyamid-Formmassen

Die Erfindung betrifft mit Fasern verstärkte Polyamid-Formmassen mit verbesserter Schlagzähigkeit.

Polyamide, insbesondere Polyamid-6 und Polyamid-66, haben aufgrund ihrer hohen Zähigkeit, verbunden mit hervorragender Chemikalienbeständigkeit sowie ausgezeichnete Ermüdungs- und Verschleißfestigkeit, als Konstruktionswerkstoffe große technische Bedeutung erlangt. Für viele Anwendungen reicht jedoch die Festigkeit und Steifigkeit der unverstärkten Polyamide nicht aus. Durch Ausrüstung der Polyamide mit Verstärkungsstoffen werden diese Nachteile weitgehend überwunden. Glasfaser-verstärkte Polyamide besitzen beispielsweise eine hohe Zug- und Biegefestigkeit, Steifigkeit und Härte. Darüber hinaus zeigen Glasfaser-verstärkte Polyamide eine verbesserte Meßhaltigkeit und Dimensionsstabilität sowie erhöhte Wärmeformbeständigkeit. Diese Eigenschaftsvorteile müssen jedoch mit einem starken Abfall der Zähigkeit und der Dehnbarkeit erkauft werden. Ein besonderer Nachteil Glasfaser-verstärkter Polyamide gegenüber ungefüllten Polyamiden ist die verringerte Schlagzähigkeit. Außerdem zeigen Glasfaser-verstärkte Polyamide, die mit bestimmten Pigmenten eingefärbt sind, im allgemeinen eine deutliche Verschlechterung der Schlagzähigkeit gegenüber ungefärbten Produkten.

Die in der Praxis verwendeten Haftvermittler, wie beispielsweise Trimethoxyaminopropysilan (Formel II)

$$NH_2-(CH_2)_3-Si-(O-CH_3)_3 \qquad (II)$$

und Schlichten, die eine bessere Haftung zwischen Glasfaser und Polymermatrix sowie eine gute Einarbeitung der Glasfasern gewährleisten sollen, haben auf die Schlagzähigkeit der Glasfaser-verstärkten Polyamide eine kleine verbesserte Wirkung.

Es ist auch bekannt, daß der Zusatz von niedermolekularen Weichmachern die Zähigkeit von ungefüllten Polyamiden verbessern kann. Verstärkte Polyamide mit solchen Weichmachern zeigen eine verringerte Steifigkeit. Weichmacher können auch die Haftung zwischen Füllstoffoberfläche und Polymermatrix stören, so daß die Zähigkeit und Zugfestigkeit sehr gering werden.

Die Schlagzähigkeit von Polyamid-Formmassen kann durch den Zusatz von Pfropfcopolymerisaten aus (Meth)acrylsäure oder deren Ester auf Olefin/Vinylester oder Olefin/Acrylester-Copolymere verbessert werden (DE-OS 2 454 770). Bei gefüllten Polyamiden ist die erreichte Verbesserung gering. Nach der DE-OS 2 703 416 kann die Schlagzähigkeit von verstärkten Polyamiden durch den Zusatz von Pfropfcopolymerisaten von (Meth)acrylsäure auf Polyethylen oder Polypropylen oder Copolymeren aus Ethylen und Propylen verbessert werden. Auch hier ist die Verbesserung gering.

Sofern man bislang Polyolefin-Pfropfpolymerisate zur Modifizierung gefüllter oder verstärkter Polyamide eingesetzt hat, handelt es sich um die auf übliche Weise hergestellten Produkte, die pro ca. 20 000 bis 30 000 Kohlenstoffatome jeweils eine Pfropfstelle enthalten, wobei das als Gewichtsmittel bestimmte mittlere Molekulargewicht $M_w$ der Pfropfäste im allgemeinen zwischen 100 000 und 1 000 000 liegt.

Überraschenderweise wurde nun gefunden, daß man eine Zähigkeitsverbesserung ohne wesentliche Nachteile dann erhält, wenn man mit Fasern, insbesondere mit Glasfaser-verstärkten Polyamiden eine neue Art von Pfropfpolymerisaten zusetzt, die pro ca. 400 bis 2000 Kohlenstoffatome eine Pfropfstelle aufweisen, wobei das mittlere Molekulargewicht $M_w$ der Pfropfäste 2000 bis 40 000 beträgt.

Gegenstand der vorliegenden Erfindung sind daher Polyamidlegierungen bestehend aus:

A) Polyamid,
B) 10—60 Gew.-% Fasern, insbesondere Glasfasern, oder Glaskugeln,
C) 0—20 Gew.-% Füllstoffe oder andere übliche Additive und
D) 1—30 Gew.-%, vorzugsweise 2—20 Gew.-% von Pfropfprodukten bestehend aus
   a) 70—99 Gew.-%, vorzugsweise 80—98 Gew.-%, einer Pfropfgrundlage bestehend aus einem Homopolymerisat von aliphatischen und/oder aromatischen Monoolefinen oder einem Copolymerisat aus den genannten Olefinen und bis zu 50 Gew.-% anderer mono-olefinisch ungesättigter, radikalisch polymerisierbarer Verbindungen und/oder bis zu 5 Gew.-% Diolefinen, und
   b) 1—30, vorzugsweise 2—20 Gew.-% von gepfropften Einheiten aus
      α) 0—100, vorzugsweise 0—50 Gew.-% einer ungesättigten Säure der allgemeinen Formel

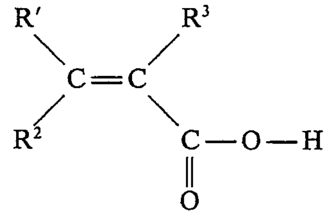

(I)

wobei $R_1$, $R_2$, $R_3$ gleich oder verschieden H, Alkyl mit $C_1-C_5$, Aryl mit $C_6-C_{12}$, Alkyl-Aryl mit $C_7-C_{13}$ bedeuten,

β) 0—100, vorzugsweise 0—70 Gew.-% Ester der ungesättigten Säure gemäß Formel (I) mit 1—8, vorzugsweise 2—4 C-Atomen im Alkoholrest und/oder

γ) 0—30, vorzugsweise 0—10 Gew.-% Acrylamid und/oder

δ) 0—30 Gew.-% Acrylnitril oder Styrol,

wobei die Summe aus A—D, bzw. a bis b, bzw. α—δ, jeweils 100 Gew.-% betragen muß, dadurch gekennzeichnet, daß die Pfropfprodukte eine Peroxidauflage (als —OOH) von 0—5000 ppm, vorzugsweise von 0—500 ppm aufweisen und durch Pfropfpolymerisation hergestellt wurden, indem man die Schmelze des als Pfropfgrundlage dienenden Polymerisats unter einem Druck von 1—150 bar bei einer Temperatur von 80 bis 300°C mit Sauerstoff oder sauerstoffhaltigen Gasen unter intensiver Durchmischung maximal 10 Minuten in Kontakt bringt, unmittelbar danach bei Abwesenheit von Sauerstoff bzw. Sauerstoff-haltigem Gas unter intenisver Durchmischung die aufzupfropfenden Monomeren zufügt und nach der Polymerisation die Restmonomeren entfernt.

Nach diesem sehr rationellen neuen Verfahren wird die Pfropfgrundlage nicht, wie bisher üblich, als Lösung oder als Latex eingesetzt. Eine langandauernde Quellung der Pfropfgrundlage durch Pfropfmonomere, wie in der DE-OS 2 454 770 beschrieben, ist ebenfalls nicht erforderlich. Vielmehr wird die Polyolefin-Pfropfgrundlage im geschmolzenem Zustand unter intensiver Durchmischung, vorzugsweise in einem Extruder, in erster Stufe mit Sauerstoff umgesetzt, wobei Peroxidgruppen gebildet werden. In einer zweiten Stufe, vorzugsweise bei demselben Extruderdurchgang, erfolgt die Aufpfropfung der radikalisch polymerisierbaren Vinylverbindungen auf die Polyolefin-Pfropfgrundlage, wozu die in der ersten Stufe entstandenen Peroxidgruppen die Initiatorradikale liefern.

Als Polyolefin-Pfropfgrundlage a) sind alle aliphatischen und aromatischen Polyolefine, wie z. B. Polyethylen, Polypropylen, Polybuten, Polystyrol sowie deren Copolymerisate, wie z. B. Copolymerisate aus Ethylen und Propylen oder Styrol und Acrylnitril, geeignet. Die Polyolefine können darüber hinaus bis zu 5 Gew.-% Reste von Diolefinen sowie bis zu 50 Gew.-% Reste radikalisch copolymerisierbarer Vinylverbindungen enthalten, insbesondere solcher auf Basis von Vinylester, vorzugsweise Vinylacetat bzw. ungesättigten Carbonsäuren und/oder deren Derivaten.

Bevorzugte ungesättigte Carbonsäuren bzw. Säurederivate sind Acrylsäure und Methacrylsäure bzw. deren Ester und Amide, insbesondere die Methyl-, Ethyl-, n- und iso-Propyl, n-, iso-, sek.- und tert.-Butyl-, 2-Ethylhexyl- und Cyclohexyl-Ester dieser Säuren.

Bevorzugte Pfropfmonomere b) sind beispielsweise Acrylsäure, Methacrylsäure, die Methyl-, Ethyl-, n- und iso-Propyl, n-, iso-, sek.- und tert.-Butyl-, 2-Ethylhexyl- und Cyclohexyl-Ester dieser Säuren, (Meth)acrylamid, Vinylacetat, Maleinsäureanhydrid und Acrylnitril. Die Pfropfmonomere können auch 0—30 Gew.-% aromatischer Monoolefine wie Styrol enthalten.

Besonders bevorzugte Pfropfmonomere b) sind Acrylsäure, n-Butylacrylat, iso-Butylacrylat, tert.-Butylacrylat und Acrylnitril.

Die Menge des in der ersten Stufe des Pfropfverfahrens eingefügten aktiven Sauerstoffs (Peroxidgruppen) kann ca. 1000 bis 10 000 ppm betragen. Während der Peroxidbildung tritt keine nennenswerte Verringerung des Molekulargewichts der Pfropfgrundlage ein. Die aktivierten Stellen sind gleichmäßig über die Makromoleküle der Pfropfgrundlage verteilt, so daß im Gegensatz zu den Pfropfpolymerisationsverfahren des Standes der Technik sehr viele aktive Stellen zur Verfügung stehen. Daraus resultieren in der sich anschließenden Pfropfpolymerisation viele verhältnismäßig kurze Seitenketten.

Die Analytik des Pfropfproduktes sei nachfolgend am Beispiel eines mit Butylacrylat und Acrylsäure gepfropften Polyethylens erläutert:

Das Polyethylenpfropfpolymerisat wird bei erhöhter Temperatur in einer Mischung der sich bei Raumtemperatur entmischenden Lösungsmittel Dimethylformamid und Methylcyclohexan gelöst und aus homogener Lösung bei 25°C fraktioniert, vgl. R. Kuhn, Makromolekulare Chemie 177, 1525 (1976). Hierbei werden nicht aufgepfropftes Butylacrylat/Acrylsäure-Copolymerisat in der unteren, Dimethylformamid-reichen Phase und ungepfropftes Polyethylen und mit Butylacrylat und Acrylsäure gepfropftes Polyethylen in der oberen Phase gefunden.

Aus der Menge des nicht aufgepfropften Butylacrylat/Acrylsäure-Copolymerisates C und aller aufgepfropften und nicht aufgepfropften Butylacrylat/Acrylsäure-Copolymerisatanteile $C_G$ läßt sich die Pfropfausbeute

$$\frac{C_G - C}{C_G}$$

bestimmen. Die Pfropfausbeuten liegen im allgemeinen zwischen 50 und 90%.

Vom nicht aufgepfropften Butylacrylat/Acrylsäure-Copolymerisat werden Gelchromatogramme (Lösungsmittel: Tetrahydrofuran) erstellt, die Grenzviskositäten in Tetrahydrofuran ermittelt und hieraus über eine universelle Eichbeziehung die Molekulargewichte $M_w$ bestimmt; vgl. Hoffmann, H. Krömer, R. Kuhn, Polymeranalytik I, Georg Thieme Verlag, Stuttgart 1977. Die Molekulargewichte des Copolymerisats C entsprechen den Molekulargewichten der Pfropfäste.

Bevorzugte Pfropfprodukte im Sinne der Erfindung sind aufgebaut aus Polyethylen als Pfropfgrundlage und einer Auflage aus 1—15 Gew.-% n-Butylacrylat, 0,1—3 Gew.-% Acrylsäure und 0—400 ppm Peroxid (als —OOH). Besonders bevorzugte Pfropfprodukte bestehen aus Polyethylen als Grundlage und einer Auflage aus 1—15 Gew.-% tert.-Butylacrylat und 0—400 ppm Peroxid (als OOH).

Als Polyamide können solche verwendet werden, die durch Polymerisation von Lactamen mit mindestens 7 Ringgliedern, vorzugsweise ε-Caprolactam oder durch Polykondensation von Aminocarbonsäuren wie α-Aminocapronsäure oder α-Amino-undecansäure erhalten werden. Ferner sind Polyamide geeignet, die durch Polykondensation von Diaminen und Dicarbonsäuren erhalten werden, z. B. Polyamide aus Hexamethylendiamin und Adipin- oder Sebacinsäure. Ebenfalls geeignet sind Copolyamide aus ε-Caprolactam oder α-Aminocapronsäure, Adipinsäure und Hexamethylendiamin sowie Gemische aus Polyamid-6 und Polyamid-6,6. Besonders bevorzugt sind Polyamid-6 und/oder Polyamid-6,6.

Die relative Viskosität der verwendeten Polyamide, gemessen als 1%ige Lösung in m-Kresol bei 25° C sollte zwischen 2,5 und 5,0, vorzugsweise zwischen 2,8 und 4,1 liegen.

Die erfindungsgemäßen Polyamidformmassen sind mit Fasern, vorzugsweise Glasfasern, die mit den handelsüblichen Haftvermittlern und Schlichten ausgerüstet sein können, in Mengen von 10 bis 60 Gew.-% verstärkt. Die Fasern weisen vorzugsweise einen Durchmesser zwischen 8 und 14 µm auf und besitzen im Granulat eine mittlere Faserlänge zwischen 0,1 und 0,5 mm.

Die erfindungsgemäßen Formmassen können anstelle der Glasfasern auch Glaskugeln oder in Kombination mit den Glasfasern auch andere Füll- oder Verstärkungsstoffe in Mengen bis zu 50 Gew.-%, bezogen auf die Glasfasermenge, enthalten, beispielsweise Glaskugeln, Asbest, Talkum, Kaolin, Wollastonit, Microvit, Glimmer oder Kreide. Darüber hinaus können auch die erfindungsgemäßen Formmassen die üblichen Additive wie Farbstoffe, Pigmente, Stabilisatoren, Nukleierungsmittel, Entformungsmittel und Flammschutzmittel enthalten.

Die Einarbeitung der erfindungsgemäßen Pfropfprodukte erfolgt vorzugsweise zusammen mit der Glasfaser und/oder anderen Füll- und Verstärkungstoffen auf z. B. üblichen Ein- und/oder Mehrwellenschneckenmaschinen nach bekannten Verfahren.

Die erfindungsgemäßen Formmassen zeichnen sich durch eine deutlich verbesserte Zähigkeit ohne große Einbußen der übrigen charakteristischen Polyamid-Eigenschaften aus. Sie sind hervorragend geeignet zur Herstellung von Formteilen, bei denen es auf eine hohe Schlagbeanspruchung ankommt, beispielsweise zur Herstellung von Gehäusen für Bohrmaschinen oder Stoßstangen.

## Beispiele

### Herstellung der Pfropfprodukte I—III

Die in Tabelle 1 aufgeführten Pfropfprodukte I, II und III auf Basis Baylon® 19 N 430 (Hochdruckpolyethylen der BAYER AG) wurden in einem gleichsinnig rotierenden Doppelwellenextruder mit selbstreinigendem Schneckenbesatz von 57 mm Wellendurchmesser D und 41 D Länge hergestellt. Die Kompression der Schmelze wurde durch Linksgewinde, Steigungssprünge und links versetzte Knetblöcke im zweigängigen variablen Wellenbesatz erreicht. Es wurden 400 l Luft pro Stunde mit 100—130 bar in die Induktionszone und 1200 l Luft pro Stunde mit 70—90 bar in die Oxidationszone gedrückt.

In die Polymerisationszone wurden die Pfropfmonomeren mit 15—18 bar eindosiert. Anschließend wurden die nicht umgesetzten Monomeren verdampft, das Pfropfprodukt als Strang extrudiert und granuliert.

Tabelle 1

| Zusammensetzung | Pfropfprodukt I | II | III |
|---|---|---|---|
| Acrylsäure | 1,35 | 0,57 | – |
| n-Butylacrylat | 1,1 | 3,4 | – |
| tert.-Butylacrylat | – | – | 5,3 |
| Peroxid (als –OOH) ppm | 360 | 290 | 380 |
| Melt Flow Index nach DIN 53 735, gemessen bei 190°C u. 2,16 kp Belastung: Meßdüse: 2,095 mm ∅ Länge: 8 mm | 2,4 | 2,6 | 2,8 |

Beispiele 1–5

Gemische aus Polycaprolactam, mit einer Viskosität, gemessen als 1%ige Lösung in m-Kresol bei 25° C von 3,1 und die übliche Menge Nukleierungsmittel und Entformungsmittel mit der in der Tabelle 2 genannten Zusammensetzung wurden auf einem Einwellenextruder bei 250–280° C aufgeschmolzen. Glasfasern in Form von »chopped strands« wurden in das geschmolzene Polycaprolactam so eingearbeitet, daß die durch eine Düse in Strangform ausgepreßte Mischung ca. 30 Gew.-% Glasfasern enthielt. Die Stränge wurden in einem Wasserbad abgekühlt, granuliert und getrocknet. Das Polyamidgranulat wurde auf einer Spritzgießmaschine zu Prüfkörpern verarbeitet. Die Spritzlinge wurden trocken in spritzfrischem Zustand geprüft.

Zur Beurteilung der mechanischen Eigenschaften wurde der mehrachsige Schlagversuch nach DIN 53 443 durchgeführt.

Erfahrungsgemäß hängt die Schlagzähigkeit bei faserverstärkten Werkstoffen stark vom Orientierungsgrad der Fasern ab. Bei den nach dem Spritzgießverfahren hergestellten Prüfkörpern für den Schlagbiegeversuch nach DIN 53 453 sind die Glasfasern in einem hohen Maß in Fließrichtung, d. h. parallel zur Länge des Prüfkörpers, orientiert. Die Schlagbeanspruchung erfolgt quer zur Fließrichtung (quer zur Faserrichtung). Hier liegt die Ursache dafür, daß mit steigendem Glasfasergehalt höhere Schlagzähigkeitswerte ($a_n$) gemessen werden. Längs zur Fließrichtung (Faserrichtung) ist die Schlagzähigkeit aber deutlich niedriger.

Ein richtiges Bild von der Zähigkeit der verstärkten Polyamide unter Schlagbeanspruchung liefert erfahrungsgemäß der Stoß- oder Fallbolzenversuch nach DIN 53 443, Voraussetzung ist allerdings, daß die Prüfkörper einen möglichst geringen Orientierungsgrad aufweisen, wie beispielsweise ein Testkästchen, das eine Höhe von 40 mm, eine Breite von 46,7 mm und eine Länge von 106,7 mm bzw. von 120 mm und eine Wanddicke von 1,5 mm aufweist.

Tabelle 2

| | Beispiel-Nr. 1 | 2 | 3 | 4 | 5 |
|---|---|---|---|---|---|
| Pfropfpolymer | – | I | II | III | III |
| Pfropfpolymer (Gew.-%) | – | 5 | 5 | 5 | 5 |
| Massetemp. (°C) | 258 | 261 | 260 | 259 | 269 |
| Physikalische Eigenschaften | | | | | |
| Schlagzähigkeit (kJ/$m^2$)[b] | 59 | 56 | 56 | 62 | 60 |
| Kerbschlagzähigkeit (kJ/$m^2$)[b] | 12,5 | 17,9 | 17,7 | 18,6 | 18,6 |
| Schädigungsarbeit nach DIN 53 443 (N-m) | 1,2 | 1,6 | 1,7 | 2,2 | 2,4 |

a) DIN 53 452

b) DIN 53 453

**Patentansprüche**

1. Polyamidlegierungen bestehend aus

A) Polyamid,
B) 10—60 Gew.-% Fasern und/oder Glaskugeln,
C) 0—20 Gew.-% weiterer üblicher Additive und
D) 1—30 Gew.-% Pfropfprodukten bestehend aus:
   a) 70—99 Gew.-% eines Homopolymerisats von aliphatischen und/oder aromatischen Monoolefinen oder einem Copolymerisat aus diesen Olefinen, bis zu 50 Gew.-% anderer mono-olefinisch ungesättigter, radikalisch polymerisierbarer Verbindungen und/oder bis zu 5 Gew.-% Diolefinen als Pfropfgrundlage, und
   b) 1—30 Gew.-% von gepfropften Einheiten aus
      α) 0—100 Gew.-% von α,β-ungesättigten Säuren der allgemeinen Formel

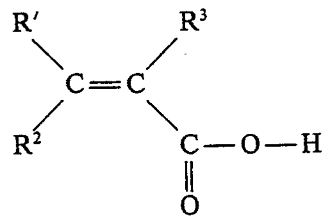

(I)

in der $R_1$, $R_2$, $R_3$ gleich oder verschieden für Wasserstoff, einen Alkylrest mit $C_1-C_5$, einen Arylrest mit $C_6-C_{12}$ oder einen Alkylarylrest mit $C_7-C_{13}$ steht,
      β) 0—100 Gew.-% Ester der ungesättigten Säure gemäß Formel (I) mit 1—8 C-Atomen im Alkohol,
      γ) 0—30 Gew.-% Acrylamid und/oder
      δ) 0—30 Gew.-% Acrylnitril oder Styrol,

wobei die Summe aus A—D, bzw. a—b, bzw. α—δ jeweils 100 Gew.-% betragen muß, dadurch gekennzeichnet, daß die Pfropfprodukte D) eine Peroxidauflage (als —OOH) von 0—5000 ppm, aufweisen und hergestellt wurden, indem man die Schmelze der Pfropfgrundlage a) unter einem Druck von 1—150 bar bei einer Temperatur von 80—300°C mit Sauerstoff oder Sauerstoff-haltigen Gasen unter intensiver Durchmischung max. 10 Minuten in Kontakt bringt, unmittelbar danach bei Abwesenheit von Sauerstoff bzw. Sauerstoff-haltigem Gas unter intensiver Durchmischung die aufzupfropfenden Vinylverbindungen b) zufügt und nach der Pfropfpolymerisation die Restmonomeren entfernt.

2. Polyamidlegierungen nach Anspruch 1, dadurch gekennzeichnet, daß sie 2—20 Gew.-% der Komponente D) enthalten.

3. Polyamidlegierungen nach Anspruch 1 oder 2, dadurch gekennzeichnet, daß die Komponente D) aus 80—98 Gew.-% der Pfropfgrundlage und 2—20 Gew.-% aus gepfropften Einheiten besteht.

4. Polyamidlegierungen nach Ansprüchen 1—3, dadurch gekennzeichnet, daß das Pfropfprodukt D) eine Peroxidauflage von 0—500 ppm aufweist.

**Claims**

1. Polyamide blends consisting of

A) polyamide,
B) 10 to 60% by weight of fibres and/or glass pellets,
C) 0 to 20% by weight of other usual additives and
D) 1 to 30% by weight of graft products consisting of
 a) 70 to 99% by weight of a homopolymer of aliphatic and/or aromatic monoolefines or a copolymer of these olefines, up to 50% by weight of other monoolefinically unsaturated compounds capable of radical polymerisation and/or up to 5% by weight of diolefines as graft substrate and
 b) 1 to 30% by weight of grafted units of
  α) 0 to 100% by weight of α,β-unsaturated acids of the general formula

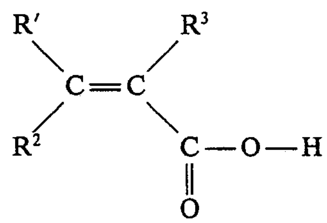

(I)

in which $R_1$, $R_2$ and $R_3$ which may be the same or different represent hydrogen, a $C_1$ to $C_5$ alkyl group, a $C_6$ to $C_{12}$ aryl group or a $C_7$ to $C_{13}$ alkylaryl group,
  β) 0 to 100% by weight of esters of the unsaturated acid of formula (I) having 1 to 8 carbon atoms in the alcohol moiety,
  γ) 0 to 30% by weight of acrylamide and/or
  δ) 0 to 30% by weight of acrylonitrile or styrene,

wherein the sum of A—D and of a—b and of α—δ must in each case be 100% by weight, characterised in that the graft products D) have a peroxide graft (as OOH) of 0 to 5000 ppm and have been prepared by bringing the molten graft substrate a) into contact with oxygen or oxygen-containing gases for a maximum of 10 minutes under conditions of vigorous mixing at a pressure of 1 to 150 bar and a temperature of 80 to 300° C, the vinyl compounds b) which are to be grafted on the graft substrate are added immediately thereafter under conditions of vigorous mixing with exclusion of oxygen or oxygen-containing gas, and the residual monomers are removed after graft polymerisation.

2. Polyamide blends according to Claim 1, characterised in that they contain 2—20% by weight of component D).

3. Polyamide blends according to Claim 1 or 2, characterised in that the component D) consists of 80—98% by weight of the graft substrate and 2—20% by weight of grafted units.

4. Polyamide blends according to Claims 1—3, characterised in that the graft product D) has a peroxide graft of 0—500 ppm.

**Revendications**

1. Alliages de polyamides consistant en

A) un polyamide,
B) 10 à 60% en poids de fibres et/ou de billes de verre,
C) 0 à 20% en poids d'autres additifs usuels et
D) 1 à 30% en poids de produits greffés consistant en:
 a) 70 à 99% en poids d'un homopolymère de monooléfine aliphatique et/ou aromatique ou d'un copolymère de ces oléfines, d'une proportion allant jusqu'à 50% en poids d'autres composés à insaturation monooléfinique aptes à la polymérisation radicalaire et/ou d'une proportion allant jusqu'à 5% en poids de dioléfines, en tant que support de greffage, et

b) 1 à 30% en poids de motifs greffés de

α) 0 à 100% en poids d'acides alpha,bêta-insaturés de formule générale

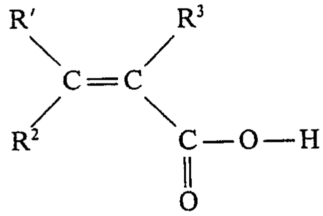

(I)

dans laquelle $R_1$, $R_2$, $R_3$, identiques ou différents, représentent l'hydrogène, un groupe alkyle en $C_1-C_5$, un groupe aryle en $C_6-C_{12}$ ou un groupe alkylaryle en $C_7-C_{13}$,

β) 0 à 100% en poids d'esters de l'acide insaturé de formule (I) contenant de 1 à 8 atomes de carbone dans l'alcool,

γ) 0 à 30% en poids d'acrylamide et/ou

δ) 0 à 30% en poids d'acrylonitrile ou de styrène,

les sommes A) à D), a) et b) et α) à δ) étant dans chaque cas égales à 100%, caractérisés en ce que les produits greffés D) ont une charge en peroxyde (en —OOH) de 0 à 5000 ppm et ont été préparés en mettant en contact pendant une durée maximale de 10 min la masse fondue du support de greffage a) sous une pression de 1 à 150 bars à une température de 80 à 300°C avec de l'oxygène ou des gaz contenant de l'oxygène sous mélange intensif, en ajoutant immédiatement après, en l'absence d'oxygène ou de gaz contenant de l'oxygène, sous mélange intensif, les composés vinyliques à greffer b) et en éliminant les monomères résiduels après la polymérisation greffée.

2. Alliages de polyamides selon la revendication 1, caractérisés en ce qu'ils contiennent de 2 à 20% en poids du composant D).

3. Alliages de polyamides selon la revendication 1 ou 2, caractérisés en ce que le composant D) consiste en 80 à 98% en poids du support de greffage et 2 à 20% en poids de motifs greffés.

4. Alliages de polyamides selon les revendications 1 à 3, caractérisés en ce que le produit de greffage D) présente une charge en peroxyde de 0 à 500 ppm.